# EUROPEAN PATENT APPLICATION

(11) **EP 1 686 817 A1**
(43) Date of publication of application: **02.08.2006**
(21) Application number: 06000621.0
(22) Date of filing: 12.01.2006
(51) Int. Cl.: H04Q 7/32, G06Q 20/00

(54) **Mobile communication terminal for electronic settlement and method thereof**

(30) Priority: 27.01.2005 KR 2005007549
(71) Applicant: LG Electronics Inc., Yongdungpo-gu Seoul (KR)
(72) Inventor: Moon, Jong Joo 201-1902, Woncheon Jungong, Yeongtong-gu Suwon-si Gyeonggi-do (KR)
(74) Representative: Katérle, Axel

(57) **Abstract**

A mobile communication terminal for electronic settlement and method thereof are disclosed, by which the electronic settlement can be done without using a 3G modem in performing the electronic settlement using the mobile communication terminal on the 2G mobile communication network. The present invention includes a memory storing user credit information in initial booting of the mobile communication terminal, a first modem for a communication on a first mobile communication network to provide the user credit information to the memory in the initial booting, a second modem for a communication on a second mobile communication network to read the user credit information from the memory in performing the electronic settlement via the second mobile communication network, and a transmitter transmitting the user credit information read by the second modem in a wireless data format.

## Description

This application claims the benefit of the Korean Patent Application No. 10-2005-0007549, filed on January 27, 2005, which is hereby incorporated by reference as if fully set forth herein.

### BACKGROUND OF THE INVENTION

### Field of the Invention

The present invention relates to an electronic settlement method, and more particularly, to a mobile communication terminal for electronic settlement and method thereof.

### Discussion of the Related Art

Generally, a wireless network according to a related art is in a time of transition stage of technological evolution. Namely, the wireless network is in the intermediate stage between the second generation (2G) mobile communication network and the third generation (3G) mobile communication network.

Hence, a mobile communication terminal is provided with both a 2G modem for the 2G communications and a 3G modem for the 3G communications.

An example of performing an electronic settlement using the mobile communication terminal equipped with both of the 2G and 3G modems is explained as follows.

First of all, in case that the mobile communication terminal attempts the electronic settlement via the 2G mobile communication network using a credit terminal for the electronic settlement, a universal subscriber identity module (USIM) patches credit information of a user of the mobile communication terminal. Specifically, in patching the user credit information, the USIM brings a credit card number corresponding to the user credit information via the 3G-modem. Thereafter, the credit card number is sent to the credit terminal via an IrDA transmitter.

Thus, in case of attempting the electronic settlement in the 2G mobile communication network, the 3G modem is needed to use. Hence, since power of the 3G-modem is turned on as well as power of the 2G modem, power consumption is wasted and a time taken for the electronic settlement is delayed.

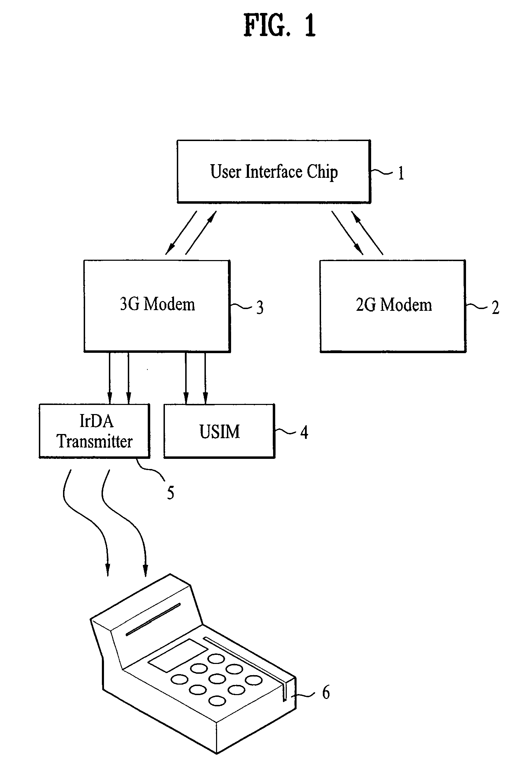

FIG. 1 is a block diagram of a mobile communication terminal for electronic settlement according to a related art.

Referring to FIG. 1, a mobile communication terminal for electronic settlement according to a related art consists of a user interface chip 1, a 2G modem 2, a 3G modem 3 and an IrDA transmitter 5.

The 2G modem 2 communicates with a user interface (hereinafter abbreviated UI) chip 1 and performs a communication for the electronic settlement on a 2G mobile communication network.

The 3G modem communicates with the UI chip 1 and brings user credit information from the USIM 4.

The USIM 4 patches the user credit information via the 3G modem 3.

And, the IrDA transmitter 5 transmits the user credit information sent from the 3G modem 3 to a credit terminal in an infrared data format.

An electronic settlement process of the above-configured mobile communication terminal according to a related art is explained as follows.

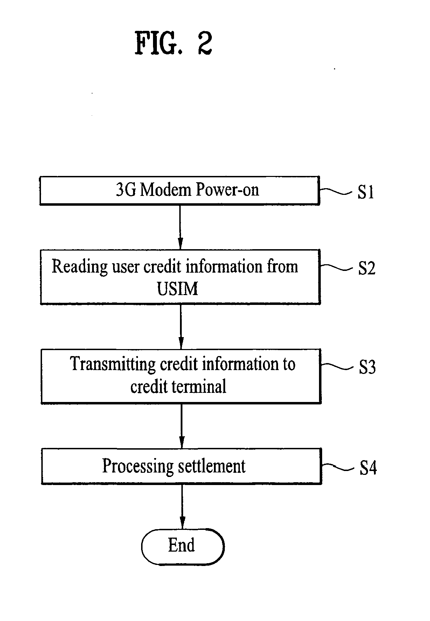

FIG. 2 is a flowchart of a process of performing an electronic settlement in a mobile communication terminal according to a related art.

Referring to FIG. 2, if a user requests to perform an electronic settlement using the mobile communication terminal shown in FIG. 1, the UI chip 1 turns on power of the 3G modem 3. In this case, power of the 2G modem 2 is turned on as well (S10).

Subsequently, the 3G modem reads user credit information from the USIM 4 (S2).

Meanwhile, the IrDA transmitter 5 having received the user credit information from the 3G modem 3 transmits the user credit information to the credit terminal 6 in an infrared data format (S3).

The credit terminal 6 then processes the corresponding electronic settlement using the user credit information received from the IrDA transmitter 5.

However, in performing the electronic settlement using the related art mobile communication terminal on the 2G mobile communication network, since the power of the 3G modem needs to be turned on as well as the 2G modem, power consumption of the mobile communication terminal is wasted and the electronic settlement process is delayed.

### SUMMARY OF THE INVENTION

Accordingly, the present invention is directed to a mobile communication terminal for electronic settlement and method thereof that substantially obviate one or more problems due to limitations and disadvantages of the related art.

An object of the present invention is to provide a mobile communication terminal for electronic settlement and method thereof, by which the electronic settlement can be done without using a 3G modem in performing the electronic settlement using the mobile communication terminal on the 2G mobile communication network.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile communication terminal, which supports an electronic settlement via different heterogeneous networks, according to the present invention includes a memory storing user credit information in initial booting of the mobile communication terminal, a first modem for a communication on a first mobile communication network to provide the user credit information to the memory in the initial booting, a second modem for a communication on a second mobile communication network to read the user credit information from the memory in performing the electronic settlement via the second mobile communication network, and a transmitter transmitting the user credit information read by the second modem in a wireless data format.

Preferably, the mobile communication terminal further includes a universal subscriber identity module (USIM) to patch the user credit information.

More preferably, the first modem brings the user credit information from the USIM to provide to the memory in the initial booting.

More preferably, a power of the first modem is turned off after having provided the user credit information to the memory in the initial booting.

Preferably, the memory is a flash memory.

Preferably, the mobile communication terminal further includes a user interface (UI) chip having a key operated by a user for the electronic settlement to control the second modem to read the user credit information from the memory if the key is pressed. More preferably, the user interface chip stores the user credit information provided via the first modem in the initial booting in the memory. More preferably, the user interface chip switches a connection between the transmitter and either the first or second modem.

Preferably, the wireless data format is an infrared data format.

Preferably, the transmitter is an IrDA transmitter.

In another aspect of the present invention, in performing an electronic settlement in a mobile communication terminal supporting communications to different heterogeneous networks, a method of performing the electronic settlement includes the steps of bringing user credit information from a USIM (universal subscriber identity module) to store in a memory if powers of a first modem for a communication on a first mobile communication network and a second modem for a communication on a second mobile communication network are turned on in an initial booting of the mobile communication terminal, allowing the first modem to read the user credit information stored in the memory in performing the electronic settlement via the first mobile communication network, and transmitting the user credit information to a credit transmitter by a wireless data communication system.

Preferably, the second modem brings the user credit information from the USIM to provide to the memory. More preferably, the power of the second modem is turned off after the second modem has provided the user credit information to the memory.

Preferably, the wireless data communication system is an IrDA system.

Preferably, the credit terminal performs the electronic settlement by receiving the user credit information.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile communication terminal for electronic settlement according to a related art;
FIG. 2 is a flowchart of a process of performing an electronic settlement in a mobile communication terminal according to a related art;
FIG. 3 is a block diagram of a mobile communication terminal for electronic settlement according to the present invention; and
FIG. 4 is a flowchart of a process of performing an electronic settlement in a mobile communication terminal according to the present invention.

### DETAILED DESCRIPTION OF THE INVENTION

Reference will now be made in detail to the preferred embodiments of the present invention, examples of which are illustrated in the accompanying drawings.

Wherever possible, the same reference numbers will be used throughout the drawings to refer to the same or like parts.

First of all, a mobile communication terminal according to the present invention supports an electronic settlement via different heterogeneous networks. And, an example explained in the following description is dedicated to a case of supporting the electronic settlement using communications via 2G (2^{nd} generation) and 3G (3^{rd} generation) mobile communication networks.

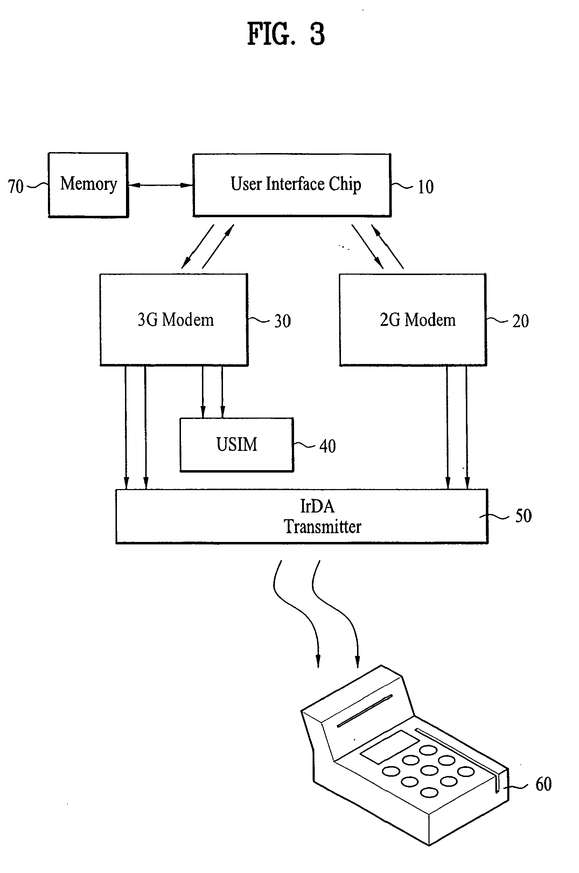

FIG. 3 is a block diagram of a mobile communication terminal for electronic settlement according to the present invention.

Referring to FIG. 3, a mobile communication terminal for electronic settlement according to the present invention includes a UI (user interface) chip 10, a memory 70 of the UI chip 10, a 2G modem 20, a 3G modem 30, a USIM 40 and an IrDA transmitter 50.

The memory 70 stores user's credit information therein. In this case, the memory 70 is a flash memory and the user's credit information includes a credit card number.

The UI chip 10 brings the user's credit information stored in the USIM 40 via the 3G modem 30 in initially booting the mobile communication terminal. And, the user's credit information is then stored in the memory 70.

The UI chip 10 includes a key operated for the electronic settlement by the user. If the user presses the key, the UI chip 10 controls the 2G modem 20 to read the user credit information stored in the memory 70.

Meanwhile, in initially booting the mobile communication terminal, powers of the 2G and 3G modems 20 and 30 are temporarily turned on. The mobile communication terminal is initialized by an initial booting. Since the powers of the 2G and 3G modems 20 and 30 are turned on in the initialization, the user credit information can be brought from the USIM 40 via the corresponding modem, and more specifically, via the 3G modem 30. Hence, the UI chip 10 previously stores the user credit information, which is brought from the USIM 40 via the 3G modem 30 when the mobile communication terminal is initially booted, in its memory 70.

The 2G modem 20 communicates with the UI chip 10 and performs a communication for the electronic settlement on a 2G mobile communication network. Specifically, the 2G modem 20 reads the user credit information from the memory 70 of the UI chip 10 in case of performing the electronic settlement on the 2G mobile communication network. The 2G modem 20 then transmits the read user credit information to the IrDA transmitter 50.

The 3G modem 30 communicates with the UI chip 10 and brings user credit information from the USIM 40 to provide to the memory 70 of the UI chip 10 when the mobile communication terminal is initially booted.

After the 3G modem 30 has provided the user credit information to the memory via the communication with the UI chip 10 and via the communication with the USIM 40 in performing the initial booting, power of the 3G modem 30 is turned off. Namely, the power of the 3G modem 30 is turned off in performing the electronic settlement via the 2G modem 20 on the 2G mobile communication network.

The USIM 40 patches the credit information of the user of the mobile communication terminal.

The IrDA transmitter 50 is connected to the 2G and 3G modems 20 and 30. Specifically, each of the 2G and 3G modems 20 and 30 is connected to the IRDA transmitter 50 by a switching system. And, the IrDA transmitter 50 transmits the user credit information read from the memory 70 by the 2G modem 20 to the credit terminal 60 in the infrared data format.

The switching system connection of the IrDA transmitter 50 is explained in detail as follows.

First of all, the IrDA transmitter 50 is connected to both of the 2G and 3G modems 20 and 30 simultaneously. And, the connections to the modems 20 and 30 are switched by the UI chip 10. Namely, the UI chip 10 switches a connection between the IrDA transmitter 50 and either the 2G or 3G modem 20 or 30. Hence, the UI chip 10 performs the switching control so that the data inputted via either the 2G or 3G modem 20 or 30 can be transmitted in the infrared data format via either the 3G or 2G modem 30 or 20.

And, the credit terminal 60 performs the electronic settlement using the credit information received from the IrDA transmitter 50.

An electronic settlement process of the above-configured mobile communication terminal according to the present invention is explained as follows.

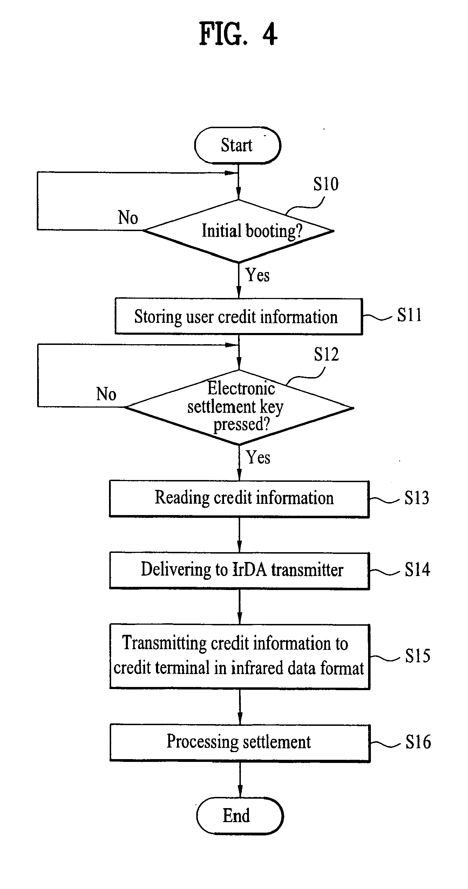

FIG. 4 is a flowchart of a process of performing an electronic settlement in a mobile communication terminal according to the present invention.

Referring to FIG. 4, as the mobile communication terminal is initially booted, the memory of the UI chip is locks so that the user credit information can be previously stored in the memory (S10, S11). In doing so, if previous credit information is stored in the memory, the credit information is updated with the currently brought latest credit information. In particular, the UI chip and the USIM are connected to each other via the 3G modem, of which power is temporarily turned on, when the mobile communication terminal is initially booted. Via the connection, the UI chip brings the user credit information from the USIM to store in the memory.

Subsequently, as the user presses an electronic settlement key, the UI chip reads the latest user credit information stored in the memory (S12, S13). The 2G modem then delivers the read credit information to the IrDA transmitter (S14).

The IrDA transmitter transmits the credit information to the credit terminal in the infrared data format (S15).

Hence, the credit terminal performs the electronic settlement using the credit information received from the IrDA transmitter (S16).

Meanwhile, the example of using the IrDA transmitter to transmit the credit information in the infrared data format is explained in the above description. Yet, the present invention is also applicable to an electronic settlement employing a short-range wireless data communication system such as IrDA, Bluetooth and the like between a mobile communication terminal and an external approval instrument (credit terminal).

Accordingly, in performing the electronic settlement using the mobile communication terminal on the 2G mobile communication network, the power of the 2G modem of the mobile communication terminal is turned on and the power the 3G modem of the mobile communication terminal is turned off. Hence, the present invention reduces the power consumption of the mobile communication terminal.

And, the present invention can reduce an overall time taken to perform the electronic settlement.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile communication terminal, which supports an electronic settlement via different heterogeneous networks, the mobile communication terminal comprising:
a memory storing user credit information in initial booting of the mobile communication terminal;
a first modem for a communication on a first mobile communication network to provide the user credit information to the memory in the initial booting;
a second modem for a communication on a second mobile communication network to read the user credit information from the memory in performing the electronic settlement via the second mobile communication network; and
a transmitter transmitting the user credit information read by the second modem in a wireless data format.

2. The mobile communication terminal of claim 1, further comprising a universal subscriber identity module (USIM) to patch the user credit information.

3. The mobile communication terminal of claim 2, wherein the first modem brings the user credit information from the USIM to provide to the memory in the initial booting.

4. The mobile communication terminal of claim 2, wherein a power of the first modem is turned off after having provided the user credit information to the memory in the initial booting.

5. The mobile communication terminal of claim 1, wherein the memory is a flash memory.

6. The mobile communication terminal of claim 1, further comprising a user interface (UI) chip having a key operated by a user for the electronic settlement to control the second modem to read the user credit information from the memory if the key is pressed.

7. The mobile communication terminal of claim 6, wherein the user interface chip stores the user credit information provided via the first modem in the initial booting in the memory.

8. The mobile communication terminal of claim 6, wherein the user interface chip switches a connection between the transmitter and either the first or second modem.

9. The mobile communication terminal of claim 1, wherein the wireless data format is an infrared data format.

10. The mobile communication terminal of claim 1, wherein the transmitter is an IrDA transmitter.

11. In performing an electronic settlement in a mobile communication terminal supporting communications to different heterogeneous networks, a method of performing the electronic settlement, comprising the steps of:
bringing user credit information from a USIM (universal subscriber identity module) to store in a memory if powers of a first modem for a communication on a first mobile communication network and a second modem for a communication on a second mobile communication network are turned on in an initial booting of the mobile communication terminal;
allowing the first modem to read the user credit information stored in the memory in performing the electronic settlement via the first mobile communication network; and
transmitting the user credit information to a credit transmitter by a wireless data communication system.

12. The method of claim 11, wherein the second modem brings the user credit information from the USIM to provide to the memory.

13. The method of claim 12, wherein the power of the second modem is turned off after the second modem has provided the user credit information to the memory.

14. The method of claim 11, wherein the wireless data communication system is an IrDA system.

15. The method of claim 11, wherein the credit terminal performs the electronic settlement by receiving the user credit information.
